# FASCICULE DE BREVET EUROPEEN

(11) **EP 2 794 300 B1**
(45) Date de publication et mention de la délivrance du brevet: **12.04.2017**
(21) Numéro de dépôt: 12808367.2
(22) Date de dépôt: 18.12.2012
(51) Int. Cl.: B60C 11/04, B60C 11/12, B60C 19/00, B60C 11/03, B60C 11/13

(54) **SOMMET POUR PNEUMATIQUE D'AVION**
KRONE FÜR EINEN FLUGZEUGREIFEN
CROWN FOR AN AIRCRAFT TIRE

(30) Priorité: 20.12.2011 FR 1162030
(43) Date de publication de la demande: 29.10.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: CHAMBRIARD, François, F-63040 Clermont-Ferrand cedex 9 (FR); ROCHE, Gilles, F-63040 Clermont-Ferrand cedex 9 (FR)
(74) Mandataire: Millanvois, Patrick Jacques Jean
(86) Numéro de dépôt international: PCT/EP2012/075943
(87) Numéro de publication internationale: WO 2013/092581

(56) Documents cités:
- US-A- 3 494 401

## Description

La présente invention concerne un pneumatique pour avion, et, en particulier, le sommet d'un pneumatique pour avion.

Les constructeurs d'avions ont comme préoccupation constante la sécurité des passagers et, par conséquent, la diminution des risques de défaillance de leurs appareils. Parmi les modes de défaillance envisagés, la perte partielle ou totale de la bande roulement d'un pneumatique, équipant le train d'atterrissage d'un avion, est un mode de défaillance critique, au cours des phases de décollage ou d'atterrissage d'un avion.

Ce mode de défaillance se produit, en particulier, lorsque le pneumatique roule sur un objet contondant présent de façon aléatoire sur la piste. Compte tenu des conditions d'usage sévères d'un pneumatique d'avion, caractérisées par une pression de gonflage, une charge statique et une vitesse élevées, le passage de la bande de roulement du pneumatique sur l'objet contondant entraîne un endommagement de la bande de roulement qui aboutit généralement au découpage de la bande de roulement puis à la projection de morceaux de bande de roulement de dimensions géométriques et de masses plus ou moins élevées.

Les morceaux de bande de roulement peuvent alors soit percuter les structures de l'avion et entraîner des dommages structurels importants, du fait de l'énergie mécanique emmagasinée par lesdits morceaux, cette énergie mécanique étant d'autant plus importante que la masse et la vitesse de projection du morceau sont élevées, soit pénétrer dans les moteurs de l'avion et entraîner des problèmes de fonctionnement desdits moteurs, si ceux-ci ne peuvent pas absorber les morceaux de bande roulement en raison de leurs dimensions trop importantes.

Il a été envisagé de renforcer les structures de l'avion pour résister aux impacts potentiels et, en particulier, ceux des morceaux de bande de roulement. Mais, à iso-matériaux, cette solution implique une augmentation de la masse de la structure, pénalisante pour la performance de l'avion, d'où l'utilisation de matériaux structurels de plus en plus légers. Le renforcement mécanique de la structure ne règle toutefois pas le problème de projections dans les moteurs.

Des dispositifs de protection vis-à-vis de la projection de morceaux de bande de roulement ont été également envisagés. Le document WO 2010012913 décrit un panneau de protection, dont la surface externe comporte un matériau composite, monté, par l'intermédiaire de pièces déformables, sur un support lié à la structure de l'avion. Les pièces déformables, fixées sur plusieurs pièces de rigidification du support et perpendiculaires à la surface externe du panneau de protection, sont adaptées à flamber sous l'effet des impacts des morceaux de bande de roulement projetés. Le document WO 2010052447 décrit un dispositif protégeant les moteurs d'un avion de la projection de débris de bande de roulement de pneumatique. Ce dispositif comprend une barre de protection connectée de manière pivotante au train d'atterrissage principal de l'avion, la barre de protection étant mobile entre une première et une seconde positions. Dans la première position, la barre de protection s'étend latéralement en travers de l'ensemble monté, constitué du pneumatique et d'une roue, pour intercepter les trajectoires possibles des débris de bande de roulement.

Une autre famille de solutions décrit des dispositifs de fractionnement de la bande roulement, en vue de minimiser la taille des morceaux de bande de roulement et donc de minimiser les impacts sur l'avion. Le document US 7669798 décrit des moyens de fractionnement, situés entre la roue et une autre partie de l'avion, aptes à fragmenter en plusieurs morceaux la partie de la bande de roulement qui se détache du pneumatique et est projetée vers l'autre partie de l'avion. Ces moyens de fractionnement, tels qu'une grille avec des lames aptes à sectionner le matériau de la bande de roulement, sont agencés pour disperser lesdits morceaux.

Les dispositifs de protection ou de fractionnement précédemment décrits présentent l'inconvénient de constituer des structures additionnelles, dont les masses supplémentaires sont pénalisantes vis-à-vis de la charge utile de l'avion.

Les inventeurs se sont donnés pour objectif de diminuer les dimensions et donc la masse des morceaux de bande de roulement, en cas de déchapage accidentel du pneumatique, sans l'utilisation de dispositifs additionnels extérieurs au pneumatique, donc sans pénalisation de la charge utile de l'avion.

Cet objectif a été atteint, selon l'invention, par un pneumatique pour avion comprenant :
- une bande de roulement destinée à venir en contact avec un sol par l'intermédiaire d'une surface de roulement, et s'étendant radialement entre une surface de fond et la surface de roulement,
- la bande de roulement comprenant au moins deux nervures circonférentielles adjacentes à au moins un sillon circonférentiel,
- chaque nervure circonférentielle s'étendant radialement entre la surface de fond et la surface de roulement, axialement entre deux faces latérales et circonférentiellement sur toute la périphérie du pneumatique,
la bande de roulement comprenant des alignements de cavités formées dans au moins une nervure circonférentielle et débouchant sur la surface de roulement, les alignements de cavités, parallèles entre eux, étant inclinés par rapport à la direction circonférentielle du pneumatique selon un angle au moins égal à 45° et les alignements de cavités étant répartis circonférentiellement sur au moins une partie de la périphérie du pneumatique, selon un pas circonférentiel au moins égal à 0.02 fois et au plus égal à 0.12 fois la longueur circonférentielle de la périphérie du pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. On appelle plan équatorial le plan perpendiculaire à l'axe de rotation du pneumatique et passant par le milieu de la surface de roulement du pneumatique.

Dans ce qui suit, les expressions « radialement », « axialement » et « circonférentiellement » signifient respectivement « selon la direction radiale », « selon la direction axiale » et « selon la direction circonférentielle ».

De façon générale, un pneumatique comprend un sommet comprenant une bande roulement destinée à venir en contact avec le sol par l'intermédiaire d'une surface de roulement, ledit sommet étant relié par deux flancs à deux bourrelets destinés à venir en contact avec une jante.

La bande de roulement est un volume torique compris radialement entre une surface de fond radialement intérieure et une surface de roulement radialement extérieure : c'est la portion usante du pneumatique.

La surface de fond est une surface théorique délimitant la hauteur d'usure maximale autorisée : lorsque le niveau d'usure atteint cette surface de fond, le pneumatique est retiré.

La surface de roulement est destinée à entrer en contact avec le sol. Par convention, on définit la largeur axiale de la surface de roulement comme la distance axiale entre les limites axiales de contact de la surface de roulement, lorsque le pneumatique à l'état neuf est soumis à une flèche radiale égale à 32%, sous l'action combinée de la charge verticale et de la pression de gonflage. Par définition, la flèche radiale d'un pneumatique est sa déformation radiale, ou variation relative de hauteur radiale, lorsque celui-ci passe d'un état gonflé non chargé à un état gonflé chargé en statique. Elle est définie par le rapport de la variation de la hauteur radiale du pneumatique sur la moitié de la différence entre le diamètre extérieur du pneumatique et le diamètre maximum de la jante mesuré sur le crochet de jante. Le diamètre extérieur du pneumatique est mesuré en statique dans un état non chargé gonflé à la pression nominale telle que recommandée, par exemple, par la Tire and Rim Association ou TRA.

La bande de roulement est généralement constituée d'éléments en relief s'étendant radialement vers l'extérieur à partir de la surface de fond, lesdits éléments en relief étant séparés des creux. Dans le cas d'un pneumatique d'avion, les éléments en relief sont le plus souvent des nervures circonférentielles séparées par des creux circonférentiels, appelés sillons circonférentiels. Une nervure circonférentielle s'étend radialement entre la surface de fond et la surface de roulement, sur une distance radiale appelée hauteur radiale. Elle s'étend axialement entre deux faces latérales, sur une distance axiale appelée largeur axiale, la largeur axiale étant mesurée au niveau de la surface de roulement. Enfin, elle s'étend circonférentiellement et continûment sur toute la périphérie du pneumatique. A titre d'exemple, une bande de roulement d'un pneumatique d'avion peut comprendre, symétriquement par rapport au plan équatorial, deux nervures axialement les plus extérieures dites nervures d'épaule, axialement limitées à l'extérieur par les bords de la bande de roulement et à l'intérieur par un sillon circonférentiel, deux nervures intermédiaires, et, au centre de la bande de roulement, une nervure centrale. Une nervure centrale ou intermédiaire est axialement comprise entre deux sillons circonférentiels, alors qu'une nervure d'épaule est adjacente à un sillon circonférentiel axialement vers l'intérieur de la bande de roulement.

Radialement à l'intérieur de la bande de roulement, est positionnée l'armature de sommet qui est la structure de renforcement du sommet du pneumatique. L'armature de sommet d'un pneumatique pour avion comprend généralement au moins une couche d'armature de sommet, dite couche de sommet. Chaque couche de sommet est constituée d'éléments de renforcement enrobés dans un matériau élastomérique, c'est-à-dire à base de caoutchouc naturel ou synthétique, lesdits éléments de renforcement parallèles entre eux formant, avec la direction circonférentielle, un angle compris entre +20° et -20°. Dans un pneumatique d'avion, les éléments de renforcement d'une couche de sommet sont généralement disposés circonférentiellement selon une courbe ondulée.

Parmi les couches de sommet, on distingue les couches de travail constituant l'armature de travail, comprenant le plus souvent des éléments de renforcement textiles, et les couches de protection constituant l'armature de protection, comprenant le plus souvent des éléments de renforcement métalliques ou textiles, et disposées radialement à l'extérieur de l'armature de travail. Les couches de travail conditionnent le comportement mécanique du sommet. Les éléments de renforcement des couches de travail sont le plus souvent des câbles constitués de filés de filaments textiles, préférentiellement en polyamides aliphatiques ou en polyamides aromatiques. Les couches de protection protègent essentiellement les couches de travail des agressions susceptibles de se propager à travers la bande de roulement radialement vers l'intérieur du pneumatique. Les éléments de renforcement des couches de protection peuvent être soit des câbles constitués de fils métalliques, soit des câbles constitués de filés de filaments textiles.

Selon l'invention, la bande de roulement comprend des alignements de cavités formées dans chaque nervure circonférentielle et débouchant sur la surface de roulement.

Une cavité, au sens de l'invention, est un trou réalisé dans une nervure circonférentielle débouchant sur la surface de roulement. Une cavité peut être localisée sur un bord d'une nervure circonférentielle et déboucher, au niveau d'une face latérale de nervure circonférentielle, sur un sillon circonférentiel. Elle peut également être localisée axialement entre les faces latérales de la nervure circonférentielle, en débouchant sur la surface de roulement uniquement mais pas sur un sillon circonférentiel : dans ce cas, la cavité est dite intérieure à la nervure circonférentielle. Une cavité est un trou s'étendant radialement vers l'intérieur sur une hauteur radiale significative, au moins égale à la moitié de la hauteur radiale de la nervure circonférentielle.

Une cavité étant généralement sensiblement symétrique par rapport à un plan perpendiculaire à la surface de roulement, ce plan de symétrie est appelé plan moyen de la cavité. Le plan moyen de la cavité permet ainsi de positionner la cavité par rapport à la direction circonférentielle du pneumatique.

Une cavité, au sens de l'invention, n'est pas une lamelle, telle qu'utilisée, par exemple, sur les bords des nervures circonférentielles d'un pneumatique pour poids lourd en vue de lutter contre l'usure irrégulière, ces lamelles ayant généralement un petit pas circonférentiel de l'ordre de quelques millimètres. Une cavité, au sens de l'invention, n'est pas non plus un entaillement transversal de la bande de roulement visant à améliorer la motricité d'un pneumatique pour essieu moteur d'un véhicule poids lourd ou à améliorer l'engrènement de la bande de roulement avec un sol de type chantier ou de type champ, pour un pneumatique pour véhicule de génie civil ou véhicule agricole. Une cavité, au sens de l'invention, est une zone d'affaiblissement local de la bande de roulement facilitant une découpe de la bande de roulement au niveau de cette cavité.

Un alignement de cavités est un ensemble de cavités dont les plans moyens respectifs sont confondus. Un alignement de cavités est caractérisé par son positionnement angulaire par rapport à la direction circonférentielle.

La bande de roulement comprend des alignements de cavités, parallèles entre eux, inclinés par rapport à la direction circonférentielle du pneumatique, selon un angle au moins égal à 45°. Les alignements de cavités sont parallèles entre eux, c'est-à-dire qu'ils forment tous le même angle avec la direction circonférentielle. Cet angle est au moins égal à 45°, c'est-à-dire que la direction des alignements de cavités est plus proche de la direction axiale que de la direction circonférentielle.

Les alignements de cavités sont répartis circonférentiellement sur au moins une partie de la périphérie du pneumatique, selon un pas circonférentiel au moins égal à 0.02 fois et au plus égal à 0.12 fois la longueur circonférentielle de la périphérie du pneumatique. Le pas circonférentiel est la distance circonférentielle entre deux alignements de cavités consécutifs, ce pas circonférentiel pouvant être constant ou variable sur la périphérie du pneumatique. La longueur circonférentielle de la périphérie du pneumatique est la longueur développée de la surface de roulement et peut être mesurée sur le pneumatique à l'état neuf, non monté sur jante et non gonflé, à l'aide, par exemple, d'un ruban.

Lorsqu'un pneumatique d'avion, en phase de décollage ou d'atterrissage roule sur un objet contondant, celui-ci peut couper la bande de roulement et initier une fissure sur une certaine épaisseur radiale. Lors du passage de cette fissure dans l'aire de contact avec le sol de la surface de roulement, sous l'action des sollicitations mécaniques cycliques à chaque tour de roue, cette fissure se propage radialement vers l'intérieur du pneumatique jusqu'à la couche de sommet la plus radialement extérieure, puis axialement et circonférentiellement le long de la face radialement extérieure de la couche de sommet la plus radialement extérieure, entraînant le découpage du sommet du pneumatique au niveau de la couche de sommet la plus radialement extérieure. Sous l'effet des sollicitations mécaniques et en particulier des efforts centrifuges, la fissuration va se propager radialement vers l'extérieur du pneumatique à travers la bande de roulement, à divers azimuts du pneumatique. Il en résulte que la portion de bande de roulement ainsi découpée sous forme de morceaux de dimensions plus ou moins importantes, voire la bande de roulement quasiment complète, va se détacher du pneumatique et être projetée vers l'extérieur avec le risque de heurter la structure de l'avion ou de pénétrer dans les moteurs.

Dans le cas d'une bande de roulement classique, c'est-à-dire comprenant uniquement des nervures circonférentielles séparées par des sillons circonférentiels, mais ne comprenant pas d'alignement de cavités tels que définis par l'invention, les morceaux de bande de roulement peuvent s'étendre axialement sur une portion axiale ou sur toute la largeur axiale de la bande de roulement. Circonférentiellement, les morceaux de bande de roulement peuvent s'étendre sur une grande partie de la périphérie du pneumatique, voire sur toute sa périphérie. Par conséquent, les morceaux de bande de roulement projetés ont des dimensions et des masses pénalisantes susceptibles d'endommager les structures ou les moteurs de l'avion.

Dans le cas d'une bande de roulement selon l'invention, c'est-à-dire comprenant, outre des nervures circonférentielles séparées par des sillons circonférentiels, des alignements de cavités, les morceaux de bande de roulement ont des dimensions axiales et circonférentielles plus faibles que dans le cas d'une bande de roulement classique.

En effet, les cavités constituent des zones de découpe préférentielle de la bande de roulement, dans la mesure où elles permettent une diminution locale de l'épaisseur radiale de la bande de roulement. Cette diminution d'épaisseur radiale entraine un effet de charnière lors du passage des cavités en entrée et en sortie de l'aire de contact avec le sol de la surface de roulement. Elle favorise ainsi l'émergence de fissures se propageant radialement vers l'extérieur à partir de la face radialement extérieure de la couche de sommet la plus radialement extérieure. Les sollicitations mécaniques d'ouverture et de fermeture alternées des cavités, lors de leur passage dans l'aire de contact à chaque tour de roue, favorisent la propagation de la fissuration qui, émerge par ailleurs plus rapidement compte tenu de la diminution locale de l'épaisseur radiale de la bande de roulement. En d'autres termes, les cavités constituent des zones d'affaiblissement local favorisant l'émergence des fissures et la découpe de la bande de roulement.

Les alignements de cavités constituent par ailleurs des plans de fissuration préférentielle de la bande roulement, limitant la longueur circonférentielle des morceaux de bande de roulement. Par conséquent, la longueur circonférentielle d'un morceau de bande de roulement ne devrait pas théoriquement excéder la distance circonférentielle ou pas circonférentiel entre deux alignements de cavités consécutifs. Le choix du pas circonférentiel conditionne ainsi la longueur circonférentielle maximale des morceaux de bande de roulement.

La présence de cavités dans une nervure circonférentielle entraine la découpe de ladite nervure circonférentielle, qui peut alors se désolidariser du pneumatique indépendamment des nervures adjacentes. La largeur axiale des morceaux de bande de roulement est ainsi réduite à la largeur axiale de la nervure.

Les inventeurs ont ainsi cherché à optimiser la répartition axiale des cavités entre les nervures circonférentielles et la répartition circonférentielle des alignements de cavités le long de la périphérie du pneumatique, pour obtenir des morceaux de bande de roulement dont les dimensions maximales satisfont le cahier des charges des constructeurs d'avions.

Selon l'invention, les alignements de cavités sont inclinés par rapport à la direction circonférentielle selon un angle au moins égal à 45°. L'angle d'inclinaison des alignements de cavités est ainsi plus proche de la direction axiale que de la direction circonférentielle, ce qui est favorable à un mouvement d'ouverture et de fermeture cycliques des cavités, lorsque celles-ci entrent dans l'aire de contact puis en sortent. Ces ouvertures et fermetures cycliques, à chaque tour de roue, favorisent la propagation des fissures.

Les alignements de cavités sont répartis circonférentiellement selon un pas circonférentiel au moins égal à 0.02 fois et au plus égal à 0.12 fois la longueur circonférentielle de la périphérie du pneumatique. Cet intervalle de valeurs du pas circonférentiel est défini en fonction de la longueur circonférentielle maximale recherchée, pour les morceaux de bande de roulement susceptibles de se détacher du pneumatique. En outre le pas circonférentiel maximal, égal à 0.12 fois la longueur circonférentielle de la périphérie du pneumatique, garantit la présence d'au moins une cavité par nervure circonférentielle dans l'aire de contact. L'aire de contact de référence est celle d'un pneumatique neuf soumis à une combinaison de charge verticale et de pression de gonflage, entrainant une flèche radiale de 32%. Par définition, la flèche radiale d'un pneumatique est sa déformation radiale, ou variation relative de hauteur radiale, lorsque celui-ci passe d'un état gonflé non chargé à un état gonflé chargé en statique. Elle est définie par le rapport de la variation de la hauteur radiale du pneumatique sur la moitié de la différence entre le diamètre extérieur du pneumatique et le diamètre maximum de la jante mesuré sur le crochet de jante. Le diamètre extérieur du pneumatique est mesuré en statique dans un état non chargé gonflé à la pression nominale.

Avantageusement la bande de roulement comprend des alignements de cavités formées dans chaque nervure circonférentielle. La présence de cavités dans chaque nervure circonférentielle garantit que chaque nervure circonférentielle sera découpée et pourra donc se désolidariser du pneumatique indépendamment des nervures circonférentielles adjacentes.

Préférentiellement, les alignements de cavités sont inclinés par rapport à la direction circonférentielle selon un angle au moins égal à 80°. L'effet d'ouverture et de fermeture cyclique des cavités au passage dans l'aire de contact est alors maximisé.

Un mode de réalisation préféré de l'invention est que les alignements de cavités sont répartis circonférentiellement selon un pas circonférentiel au moins égal à 0.06 fois la longueur circonférentielle de la périphérie du pneumatique. Ce pas circonférentiel entraine la présence d'au moins deux cavités par nervure circonférentielle dans l'aire de contact. Ce pas circonférentiel minimale garantit en outre la robustesse des nervures circonférentielles, dont l'entaillement est ainsi modéré, et une taille maximale pas trop petite des morceaux de bande de roulement.

Préférentiellement, les alignements de cavités sont répartis circonférentiellement sur toute la périphérie du pneumatique, selon un pas circonférentiel constant. Une répartition circonférentielle uniforme des alignements de cavités est plus simple pour la fabrication et permet d'homogénéiser la longueur circonférentielle des morceaux de bande de roulement. Toutefois, un pas variable peut s'avérer nécessaire pour prendre en compte des contraintes de bruit du pneumatique en roulage. Il est en effet connu de l'homme du métier qu'une répartition circonférentielle non uniforme des cavités peut contribuer à une réduction significative du bruit généré par la bande de roulement du pneumatique en roulage, qui peut être une contrainte dans le cas d'un pneumatique d'avion destiné à rouler à très haute vitesse.

Chaque alignement de cavités comprend avantageusement au moins une cavité, intérieure à une nervure circonférentielle et débouchant uniquement sur la surface de roulement. Pour garantir la découpe axiale d'une nervure circonférentielle large, c'est-à-dire de largeur axiale typiquement supérieure au quart de la largeur axiale de la surface de roulement, il est avantageux de positionner une cavité supplémentaire localisée axialement entre les faces latérales de la nervure circonférentielle et débouchant sur la surface de roulement, mais pas sur un sillon circonférentiel. Cette cavité est alors dite intérieure à la nervure circonférentielle. La fissuration peut ainsi se propager plus facilement d'une face latérale de la nervure circonférentielle à l'autre entre la ou les cavités débouchant sur un sillon circonférentiel et la cavité intérieure.

La hauteur radiale d'une cavité, mesurée selon la droite, passant par le point le plus radialement intérieur de la cavité et perpendiculaire à la surface de roulement, est avantageusement au moins égale à la moitié de la hauteur radiale de la nervure circonférentielle et au plus égale la hauteur radiale de la nervure circonférentielle. La hauteur radiale minimale garantit, en fond de la cavité, une épaisseur radiale de la bande de roulement suffisamment faible pour faciliter la fissuration de la bande roulement. La hauteur radiale maximale garantit de ne pas descendre en-dessous du niveau d'usure visé. L'optimisation de la hauteur radiale de la cavité dépend également du volume de bande de roulement nécessaire vis-à-vis de la performance en usure du pneumatique visée.

Encore avantageusement la longueur de la cavité, mesurée selon la droite, intersection du plan moyen de la cavité perpendiculaire à la surface de roulement et de la surface de roulement, est au plus égale au quart de la largeur axiale de la nervure circonférentielle. Au-delà de cette valeur, la cavité risque d'amorcer une fissure dans la nervure circonférentielle, en fonctionnement normal, sans qu'il y ait d'endommagement de la bande roulement par un objet contondant.

La longueur de la cavité, mesurée selon la droite du plan moyen de la cavité perpendiculaire à la surface de roulement, la droite étant parallèle à la surface de roulement à une distance radiale donnée, est également avantageusement décroissante entre la surface de roulement et le point le plus radialement intérieur de la cavité. Cette caractéristique correspond à une cavité dont la longueur décroit depuis la surface de roulement jusqu'au fond de la cavité. Cette conception permet également de rendre plus robuste la tenue à la fissuration de la cavité, en fonctionnement normal.

Il est enfin avantageux que la largeur de la cavité, mesurée dans la surface de roulement perpendiculairement au plan moyen de la cavité perpendiculaire à la surface de roulement, soit au moins égale à 1 mm, de préférence au moins égale à 3 mm. La valeur de 1 mm correspond à un minimum technologique dans le cas d'une cavité en forme de lamelle, telle que classiquement utilisée dans le domaine du pneumatique. La valeur de 3 mm correspond à une valeur minimale préférentielle, garantissant l'initiation de la découpe de la bande de roulement.

Les caractéristiques et autres avantages de l'invention seront mieux compris à l'aide des figures 1 à 7 :
- figure 1 : coupe méridienne du sommet d'un pneumatique pour avion,
- figure 2 : vue de dessus d'une bande de roulement d'un pneumatique d'avion de l'état de la technique,
- figure 3 : vue de dessus d'une bande de roulement d'un pneumatique d'avion selon un premier mode de réalisation de l'invention,
- figure 4 : vue de dessus d'une bande de roulement d'un pneumatique d'avion selon une variante du premier mode de réalisation de l'invention,
- figure 5 : vue de dessus d'une bande de roulement d'un pneumatique d'avion selon un deuxième mode de réalisation de l'invention,
- figure 6 : vue de dessus d'une bande de roulement d'un pneumatique d'avion selon une variante du deuxième mode de réalisation de l'invention,
- figure 7 : vue en coupe d'une cavité en bord de nervure circonférentielle selon le plan moyen de la cavité.

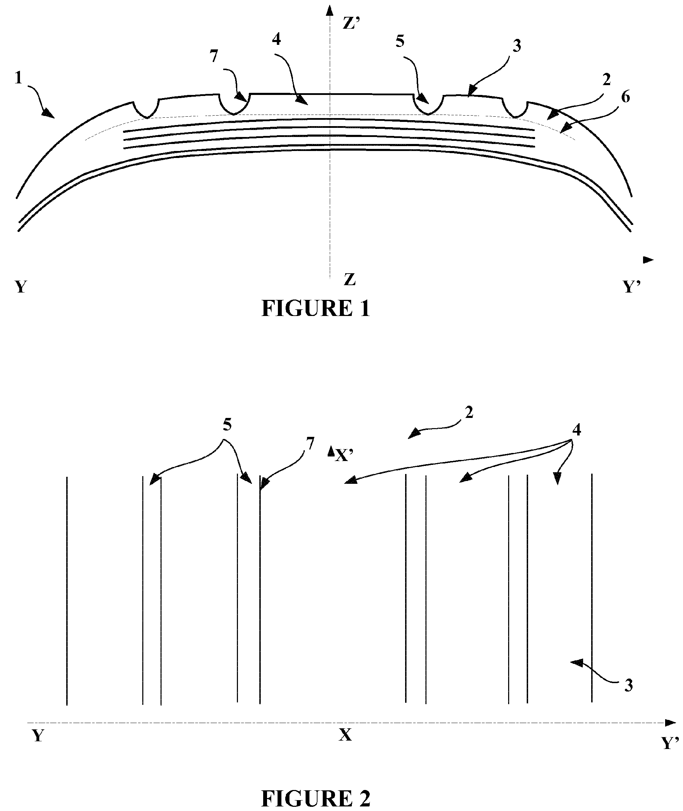

Les figures 1 à 7 ne sont pas représentées à l'échelle et sont représentées de façon simplifiée, afin de faciliter la compréhension de l'invention.

La figure 1 présente une coupe méridienne du sommet du pneumatique 1, c'est-à-dire une coupe dans un plan méridien (YY', ZZ'), où les directions YY' et ZZ' sont les directions respectivement axiale et radiale.

La figure 1 présente un pneumatique 1 pour avion comprenant une bande de roulement 2 destinée à venir en contact avec un sol par l'intermédiaire d'une surface de roulement 3 et radialement comprise entre une surface de fond 6 et la surface de roulement 3. La bande de roulement 2 comprend cinq nervures circonférentielles 4, dans le cas présent, adjacentes à au moins un sillon circonférentiel 5. Chaque nervure circonférentielle 4 s'étend radialement entre la surface de fond 6 et la surface de roulement 3 et axialement entre deux faces latérales 7, formant les parois du sillon circonférentiel 5. Le pneumatique 1 comprend également une armature de sommet 8, constituées de couches de sommet, radialement intérieure à la surface de fond 6.

La figure 2 présente la vue de dessus d'une bande de roulement d'un pneumatique d'avion de l'état de la technique. La bande de roulement 2 comprend cinq nervures circonférentielles 4: deux nervures circonférentielles d'épaule symétriques par rapport à la direction (XX'), deux nervures circonférentielles intermédiaires également symétriques par rapport à la direction (XX') et une nervure circonférentielle centrale. Chaque nervure circonférentielle d'épaule est limitée axialement à l'intérieur par une face latérale 7, formant une paroi d'un sillon circonférentiel 5, et axialement à l'extérieur par la limite axiale de l'aire de contact avec le sol de la surface de roulement (3), définie par convention pour un pneumatique neuf soumis à une flèche radiale de 32%. Les nervures circonférentielles intermédiaires et centrale, respectivement axialement comprises entre deux sillons circonférentielles 5, sont axialement limitées par des faces latérales 7, formant les parois d'un sillon circonférentiel 5.

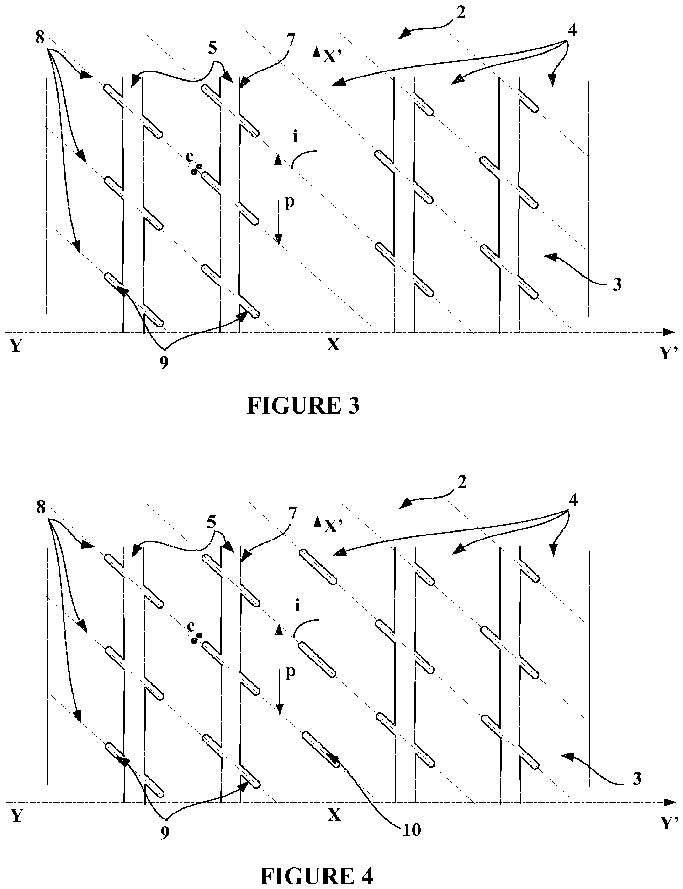

La figure 3 présente la vue de dessus d'une bande de roulement 2 d'un pneumatique d'avion selon un premier mode de réalisation de l'invention. Comme dans la figure 1, la bande de roulement 2 comprend cinq nervures circonférentielles 4, respectivement axialement délimitées par deux faces latérales 7, formant les parois d'un sillon circonférentiel 5. La bande de roulement 2 comprend des alignements 8 de cavités 9, inclinés par rapport à la direction circonférentielle XX' du pneumatique, parallèles entre eux et répartis circonférentiellement sur toute la périphérie (non représentée) du pneumatique, selon un pas circonférentiel p au moins égal à 0.02 fois la longueur circonférentielle de la périphérie du pneumatique. Dans le cas présent, les alignements 8 de cavités 9 sont inclinés par rapport à la direction circonférentielle XX', selon un angle i égal à 45°. Chaque cavité 9 a une largeur c. Chaque nervure circonférentielle 4 d'épaule comprend une cavité 9 et chacune des autres nervures circonférentielles 4 comprend deux cavités 9. Par conséquent, chaque alignement 8 de cavités 9, selon ce premier mode de réalisation de l'invention, comprend huit cavités 9 débouchant chacune sur un sillon circonférentiel 5.

La figure 4 présente la vue de dessus d'une bande de roulement 2 d'un pneumatique d'avion selon une variante du premier mode de réalisation de l'invention. Cette variante diffère du premier mode de réalisation de l'invention de la figure 3 par la présence, dans chaque alignement 8 de cavités 9, d'une cavité 10, intérieure à la nervure circonférentielle 4 centrale et débouchant uniquement sur la surface de roulement 3. L'ajout d'une cavité 10 intérieure à la nervure circonférentielle 4 centrale est justifié par le fait que la largeur axiale de la nervure circonférentielle 4 centrale est supérieure au quart de la largeur axiale de la surface de roulement 3. Dans cette variante, chaque alignement 8 de cavités 9 comprend ainsi neuf cavités, dont huit débouchant chacune sur un sillon circonférentiel 5.

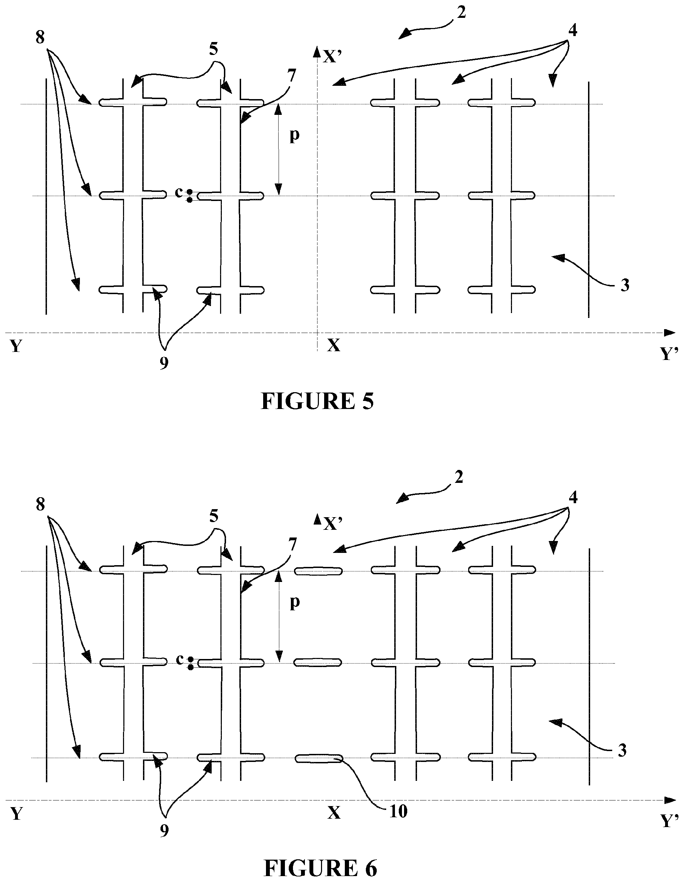

La figure 5 présente la vue de dessus d'une bande de roulement 2 d'un pneumatique d'avion selon un deuxième mode de réalisation de l'invention. Ce deuxième mode de réalisation diffère du premier mode de réalisation par l'angle i, formé par les alignements 8 de cavités 9 par rapport à la direction circonférentielle XX', égal dans le cas présent à 90°.

La figure 6 présente la vue de dessus d'une bande de roulement 2 d'un pneumatique d'avion selon une variante du deuxième mode de réalisation de l'invention. Cette variante diffère du deuxième mode de réalisation de l'invention de la figure 5 par la présence, dans chaque alignement 8 de cavités 9, d'une cavité 10, intérieure à la nervure circonférentielle 4 centrale et débouchant uniquement sur la surface de roulement 3. L'ajout d'une cavité 10 intérieure à la nervure circonférentielle 4 centrale est justifié par le fait que la largeur axiale de la nervure circonférentielle 4 centrale est supérieure au quart de la largeur axiale de la surface de roulement 3. Dans cette variante, chaque alignement 8 de cavités 9 comprend ainsi neuf cavités, dont huit débouchant chacune sur un sillon circonférentiel 5.

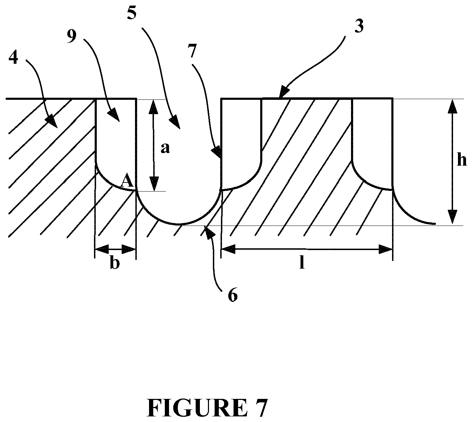

La figure 7 présente une vue en coupe d'une cavité 9 en bord de nervure circonférentielle 4 selon le plan moyen de la cavité. Une cavité 9, formée dans une nervure circonférentielle 4 radialement comprise entre la surface de fond 6 et la surface de roulement 3 et axialement limitée par une face latérale 7, débouche à la fois dans le sillon 5 et sur la surface de roulement 3. La hauteur radiale a de la cavité 9, mesurée selon la droite, passant par le point A le plus radialement intérieur de la cavité 9 et perpendiculaire à la surface de roulement 3, est au moins égale à la moitié de la hauteur radiale h de la nervure circonférentielle 4 et au plus égale à la hauteur radiale h de la nervure circonférentielle 4. La longueur b de la cavité 9, mesurée selon la droite, intersection du plan moyen de la cavité 9 perpendiculaire à la surface de roulement 3 et de la surface de roulement 3, c'est-à-dire selon la droite axiale du plan moyen contenue dans la surface de roulement, est au plus égale au quart de la largeur axiale 1 de la nervure circonférentielle 4. Dans le cas présent, la longueur b de la cavité 9 est sensiblement constante sur toute la hauteur radiale a de la cavité, sauf au niveau du raccordement à la face latérale en fond de cavité.

Les inventeurs ont réalisé l'invention selon le mode de réalisation de la figure 5, avec des alignements de cavités en bord de nervures circonférentielles, lesdits alignements de cavités étant perpendiculaires à la direction circonférentielle, pour un pneumatique d'avion de dimension 46x17R20, dont l'usage est caractérisé par une pression nominale égale à 15.9 bars, une charge statique nominale égale à 20473 daN et une vitesse de référence maximale de 225 km/h.

Dans le pneumatique étudié, l'armature de sommet comprend 7 couches de travail, comprenant des éléments de renforcement en matériau hybride combinant un polyamide aliphatique, de type aramide, et un polyamide aromatique, de type nylon, lesdits éléments de renforcement formant un angle variable compris entre 0° et 12° avec la direction circonférentielle. L'armature de sommet comprend radialement, à l'extérieur des couches de travail, une couche de protection comprenant des éléments de renforcement métalliques sensiblement circonférentiels. La bande de roulement comprend cinq nervures circonférentielles d'épaule, intermédiaires et centrale de largeurs axiales respectives 34.5 mm, 33.5 mm et 82 mm. La bande de roulement comprend des alignements de cavités positionnées en bord des sillons circonférentiels. Les alignements de cavités forment, avec la direction circonférentielle, un angle égal à 90°. Le pas des alignements de cavités, constant sur toute la périphérie du pneumatique, est égal à 121 mm, ce qui permet d'avoir, selon la direction circonférentielle, 3 cavités par bord de nervure circonférentielle et, selon la direction axiale, 8 cavités par alignement, soit 24 cavités dans l'aire de contact avec le sol de la surface de roulement, lorsque le pneumatique neuf est soumis à une flèche radiale de 32%. Chaque cavité a une largeur de 3 mm, une hauteur radiale de 12 mm et une longueur de 10 mm.

Dans le cas de l'architecture de référence, la masse des morceaux de bande de roulement est comprise entre 0.1 kg et 3.5 kg, alors que, dans l'architecture selon l'invention, la masse des morceaux de bande de roulement est comprise entre 0.1 kg et 0.8 kg.

Pour encore mieux maîtriser les dimensions maximales des morceaux de bande de roulement, l'invention peut être avantageusement combinée avec des architectures de sommet adaptées.

Par exemple, il peut être envisagé de rapprocher au maximum l'armature de sommet, et en particulier la couche de sommet la plus radialement extérieure qui est généralement une couche de protection métallique, de la surface de fond, par exemple à une distance radiale de l'ordre de 2 mm. Ceci permet de réduire corrélativement la distance radiale entre la couche de sommet la plus radialement extérieure et le fond de la cavité, donc la distance de fissuration lors de la propagation de la fissuration radialement vers l'extérieur. De plus, l'épaisseur radiale des morceaux des bandes de roulement est diminuée donc leur masse est réduite.

Une autre solution d'architecture de sommet, susceptible de renforcer encore l'efficacité de l'invention, consiste à positionner radialement à l'intérieur de chaque nervure circonférentielle un moyen de déchapage, permettant de limiter les dimensions des morceaux de bande de roulement, après déchapage, c'est-à-dire leur épaisseur radiale, leur largeur axiale et leur longueur circonférentielle.

Le moyen de déchapage étant disposé radialement à l'intérieur d'au moins une nervure circonférentielle entre la surface de fond et l'armature de sommet, la fissure initiée par un objet contondant va se propager radialement vers l'intérieur jusqu'au moyen de déchapage avant d'évoluer axialement et circonférentiellement. En d'autres termes, la fissure va se propager moins profondément grâce à ce moyen de déchapage qui fait obstacle à sa propagation radiale. Le moyen de déchapage étant radialement extérieur à l'armature de sommet, l'épaisseur radiale maximale d'un morceau de bande de roulement va être inférieur à celle obtenue en l'absence de moyen de déchapage. Par ailleurs, le fait d'être radialement intérieur à la surface de fond garantit que le moyen de déchapage ne va pas apparaître au cours de l'usure de la nervure circonférentielle et limiter ainsi la durée de vie sur usure du pneumatique.

Par ailleurs le moyen de déchapage est disposé axialement entre les deux arêtes de ladite nervure circonférentielle dans la surface de roulement. En d'autres termes, chaque nervure circonférentielle a son moyen de déchapage individuel, qui ne s'étend pas axialement au-delà des arêtes de ladite nervure circonférentielle dans la surface de roulement. Ceci implique une discontinuité entre les moyens de déchapage respectifs des nervures circonférentielles constituant la bande de roulement. Par conséquent, le moyen de déchapage n'est pas un moyen unique commun à toutes les nervures circonférentielles. Ceci permet d'éviter la propagation axiale de la fissure d'une nervure circonférentielle à l'autre. Ainsi, si une seule nervure est endommagée par un objet contondant, celle-ci devrait être la seule victime de la fissuration. En d'autres termes, seule la nervure circonférentielle concernée serait amenée à se désolidariser du pneumatique.

Enfin le moyen de déchapage est disposé circonférentiellement sur au moins une partie de la circonférence du pneumatique. Généralement, mais pas obligatoirement, le moyen de déchapage sera continu sur toute la circonférence du pneumatique. Il pourra, le cas échéant, être réparti selon des secteurs angulaires à optimiser.

Les inventeurs ont pu observer que la présence d'un moyen de déchapage permettait également de réduire la longueur circonférentielle des morceaux de bande de roulement. Ils ont interprété ce fait comme étant le résultat d'une flexion cyclique du moyen de déchapage, autour de la direction axiale, en certains points circonférentiellement répartis du moyen de déchapage pouvant correspondre sensiblement aux cavités formées dans les nervures circonférentielles. En d'autres termes, le moyen de déchapage est soumis le long de sa circonférence à des effets de charnière pouvant aboutir à la rupture locale du moyen de déchapage.

Il est important de noter que le matériau du moyen de déchapage doit être choisi de façon à ne pas apporter de contribution mécanique au fonctionnement du sommet.

Le moyen de déchapage peut comprendre avantageusement au moins une couche de déchapage, comprenant des éléments de renforcements parallèles entre eux, préférentiellement, mais pas exclusivement, en polyamide aliphatique de type nylon.

## Revendications

1. Pneumatique (1) pour avion comprenant :
- une bande de roulement (2) destinée à venir en contact avec un sol par l'intermédiaire d'une surface de roulement (3), et s'étendant radialement entre une surface de fond (6) et la surface de roulement (3),
- la bande de roulement (2) comprenant au moins deux nervures circonférentielles (4) adjacentes à au moins un sillon circonférentiel (5),
- chaque nervure circonférentielle (4) s'étendant radialement entre la surface de fond (6) et la surface de roulement (3), axialement entre deux faces latérales (7) et circonférentiellement sur toute la périphérie du pneumatique (1),
**caractérisé en ce que** la bande de roulement (2) comprend des alignements (8) de cavités (9) formées dans chaque nervure circonférentielle (4) et débouchant sur la surface de roulement (3), **en ce que** les alignements (8) de cavités (9), parallèles entre eux, sont inclinés par rapport à la direction circonférentielle (XX') du pneumatique (1) selon un angle (i) au moins égal à 45° et **en ce que** les alignements (8) de cavités (9) sont répartis circonférentiellement sur au moins une partie de la périphérie du pneumatique (1), selon un pas circonférentiel (p) au moins égal à 0.02 fois et au plus égal à 0.12 fois la longueur circonférentielle de la périphérie du pneumatique (1).

2. Pneumatique (1) pour avion selon la revendication 1, **caractérisé en ce que** les alignements (8) de cavités (9) sont inclinés par rapport à la direction circonférentielle (XX') selon un angle (i) au moins égal à 80°.

3. Pneumatique (1) pour avion selon l'une des revendications 1 ou 2, **caractérisé en ce que** les alignements (8) de cavités (9) sont répartis circonférentiellement selon un pas circonférentiel (p) au moins égal à 0.06 fois la longueur circonférentielle de la périphérie du pneumatique (1).

4. Pneumatique (1) pour avion selon l'une quelconque des revendications 1 à 3, **caractérisé en ce que** les alignements (8) de cavités (9) sont répartis circonférentiellement sur toute la périphérie du pneumatique (1), selon un pas circonférentiel (p) constant.

5. Pneumatique (1) pour avion selon l'une quelconque des revendications 1 à 4, **caractérisé en ce que** chaque alignement (8) de cavités comprend au moins une cavité (10), intérieure à une nervure circonférentielle (4) et débouchant uniquement sur la surface de roulement (3).

6. Pneumatique (1) pour avion selon l'une quelconque des revendications 1 à 5, une nervure circonférentielle (4) s'étendant radialement entre la surface de fond (6) et la surface de roulement (3) sur une hauteur radiale (h), **caractérisé en ce que** la hauteur radiale (a) d'une cavité (9, 10), mesurée selon la droite, passant par le point (A) le plus radialement intérieur de la cavité (9, 10) et perpendiculaire à la surface de roulement (3), est au moins égale à la moitié de la hauteur radiale (h) de la nervure circonférentielle (4) et au plus égale la hauteur radiale (h) de la nervure circonférentielle (4).

7. Pneumatique (1) pour avion selon l'une quelconque des revendications 1 à 6, une nervure circonférentielle (4) s'étendant axialement entre deux faces latérales (7) sur une largeur axiale (1) **caractérisé en ce que** la longueur (b) de la cavité (9, 10), mesurée selon la droite, intersection du plan moyen de la cavité (9, 10) perpendiculaire à la surface de roulement (3) et de la surface de roulement (3), est au plus égale au quart de la largeur axiale (1) de la nervure circonférentielle (4).

8. Pneumatique (1) pour avion selon l'une quelconque des revendications 1 à 7, **caractérisé en ce que** la largeur (c) de la cavité (9, 10), mesurée dans la surface de roulement (3) perpendiculairement au plan moyen de la cavité (9, 10) perpendiculaire à la surface de roulement (3), est au moins égale à 1 mm, de préférence au moins égale à 3 mm.

## Patentansprüche

1. Reifen (1) für ein Flugzeug, aufweisend:
- eine Reifenlauffläche (2), welche dafür vorgesehen ist, durch eine Lauf-Oberfläche (3) mit einem Boden in Kontakt zu kommen, und sich radial zwischen einer Bodenfläche (6) und der Lauf-Oberfläche (3) erstreckt,
- wobei die Reifenlauffläche (2) mindestens zwei umfängliche Rippen (4) aufweist, welche zu mindestens einer umfänglichen Rille (5) benachbart sind,
- wobei sich jede umfängliche Rippe (4) radial zwischen der Bodenfläche (6) und der Lauf-Oberfläche (3), axial zwischen zwei seitlichen Flächen (7) und in Umfangsrichtung über den gesamten Umfang des Reifens (1) erstreckt,
**dadurch gekennzeichnet, dass** die Reifenlauffläche (2) Fluchten (8) von Hohlräumen (9) aufweist, welche in jeder umfänglichen Rippe (4) ausgebildet sind und auf der Lauf-Oberfläche (3) münden, dass die zueinander parallelen Fluchten (8) von Hohlräumen (9) in Bezug auf die Umfangsrichtung (XX') des Reifens (1) gemäß einem Winkel (i) von mindestens gleich 45° geneigt sind und dass die Fluchten (8) von Hohlräumen (9) über den Umfang über mindestens einen Teil des Umfangs des Reifens (1) gemäß einer Teilung (p) von mindestens gleich 0,02 Mal und höchstens gleich 0,12 Mal die umfängliche Länge des Umfangs des Reifens (1) verteilt sind.

2. Reifen (1) für ein Flugzeug nach Anspruch 1, **dadurch gekennzeichnet, dass** die Fluchten (8) von Hohlräumen (9) in Bezug auf die Umfangsrichtung (XX') gemäß einem Winkel (i) von mindestens gleich 80° geneigt sind.

3. Reifen (1) für ein Flugzeug nach Anspruch 1 oder 2, **dadurch gekennzeichnet, dass** die Fluchten (8) von Hohlräumen (9) über den Umfang gemäß einer Teilung (p) von mindestens gleich 0,06 Mal die umfängliche Länge des Umfangs des Reifens (1) verteilt sind.

4. Reifen (1) für ein Flugzeug nach einem der Ansprüche 1 bis 3, **dadurch gekennzeichnet, dass** die Fluchten (8) von Hohlräumen (9) in Umfangsrichtung über den gesamten Umfang des Reifens (1) gemäß einer konstanten Teilung (p) verteilt sind.

5. Reifen (1) für ein Flugzeug nach einem der Ansprüche 1 bis 4, **dadurch gekennzeichnet, dass** jede Flucht (8) von Hohlräumen mindestens einen Hohlraum (10) aufweist, welcher innerhalb einer umfänglichen Rippe (4) liegt und ausschließlich auf der Lauf-Oberfläche (3) mündet.

6. Reifen (1) für ein Flugzeug nach einem der Ansprüche 1 bis 5, wobei sich eine umlaufende Rippe (4) radial zwischen der Bodenfläche (6) und der Lauf-Oberfläche (3) über eine radiale Höhe (h) erstreckt, **dadurch gekennzeichnet, dass** die radiale Höhe (a) eines Hohlraums (9, 10), welche gemäß der durch den am weitesten radial innen liegenden Punkt (A) des Hohlraums (9, 10) verlaufenden und auf der Lauf-Oberfläche (3) senkrecht stehenden Geraden gemessen wird, mindestens gleich der Hälfte der radialen Höhe (h) der umlaufenden Rippe (4) und höchstens gleich der radialen Höhe (h) der umlaufenden Rippe (4) ist.

7. Reifen (1) für ein Flugzeug nach einem der Ansprüche 1 bis 6, wobei sich eine umlaufende Rippe (4) axial zwischen zwei seitlichen Flächen (7) über eine axiale Breite (I) erstreckt, **dadurch gekennzeichnet, dass** die Länge (b) des Hohlraums (9, 10), welche gemäß der Geraden, Schnittlinie von der auf der Lauf-Oberfläche (3) senkrecht stehenden Mittelebene des Hohlraums (9, 10) und der Lauf-Oberfläche (3) gemessen wird, höchstens gleich einem Viertel der axialen Breite (I) der umlaufenden Rippe (4) ist.

8. Reifen (1) für ein Flugzeug nach einem der Ansprüche 1 bis 7, **dadurch gekennzeichnet, dass** die Breite (c) des Hohlraums (9, 10), welche auf der Lauf-Oberfläche (3) senkrecht zur Mittelebene des Hohlraums (9, 10), welche senkrecht auf der Lauf-Oberfläche (3) steht, gemessen wird, mindestens gleich 1 mm, vorzugsweise mindestens gleich 3 mm, beträgt.

## Claims

1. Tyre (1) for an aeroplane, comprising:
- a tread (2) intended to come into contact with the ground via a tread surface (3), and extending radially between a bottom surface (6) and the tread surface (3),
- the tread (2) comprising at least two circumferential ribs (4) adjacent to at least one circumferential groove (5),
- each circumferential rib (4) extending radially between the bottom surface (6) and the tread surface (3), axially between two lateral faces (7) and circumferentially around the entire periphery of the tyre (1),
**characterized in that** the tread (2) comprises rows (8) of cavities (9) formed in each circumferential rib (4) and opening onto the tread surface (3), **in that** the rows (8) of cavities (9), which are parallel to one another, are inclined with respect to the circumferential direction (XX') of the tyre (1) at an angle (i) at least equal to 45°, and **in that** the rows (8) of cavities (9) are distributed circumferentially over at least part of the periphery of the tyre (1) with a circumferential spacing (p) at least equal to 0.02 times and at most equal to 0.12 times the circumferential length of the periphery of the tyre (1).

2. Tyre (1) for an aeroplane according to Claim 1, **characterized in that** the rows (8) of cavities (9) are inclined with respect to the circumferential direction (XX') at an angle (i) at least equal to 80°.

3. Tyre (1) for an aeroplane according to either of Claims 1 and 2, **characterized in that** the rows (8) of cavities (9) are distributed circumferentially at a circumferential spacing (p) at least equal to 0.06 times the circumferential length of the periphery of the tyre (1).

4. Tyre (1) for an aeroplane according to any one of Claims 1 to 3, **characterized in that** the rows (8) of cavities (9) are distributed circumferentially over the entire periphery of the tyre (1) at a circumferential spacing (p) that is constant.

5. Tyre (1) for an aeroplane according to any one of Claims 1 to 4, **characterized in that** each row (8) of cavities comprises at least one cavity (10) internal to a circumferential rib (4) and opening only onto the tread surface (3).

6. Tyre (1) for an aeroplane according to any one of Claims 1 to 5, a circumferential rib (4) extending radially between the bottom surface (6) and the tread surface (3) over a radial height (h), **characterized in that** the radial height (a) of a cavity (9, 10), measured along the straight line that passes through the radially innermost point (A) of the cavity (9, 10) and perpendicular to the tread surface (3), is at least equal to half the radial height (h) of the circumferential rib (4) and at most equal to the radial height (h) of the circumferential rib (4).

7. Tyre (1) for an aeroplane according to any one of Claims 1 to 6, a circumferential rib (4) extending axially between two lateral faces (7) over an axial width (1) **characterized in that** the length (b) of the cavity (9, 10), measured along the straight line, intersection of the mean plane of the cavity (9, 10) perpendicular to the tread surface (3) and of the tread surface (3), is at most equal to one quarter of the axial width (1) of the circumferential rib (4).

8. Tyre (1) for an aeroplane according to any one of Claims 1 to 7, **characterized in that** the width (c) of the cavity (9, 10), measured in the tread surface (3) perpendicular to the mean plane of the cavity (9, 10) perpendicular to the tread surface (3), is at least equal to 1 mm, preferably at least equal to 3 mm.
